# EUROPEAN PATENT SPECIFICATION

(11) **EP 0 933 841 B1**
(45) Date of publication and mention of the grant of the patent: **06.04.2005**
(21) Application number: 99300687.3
(22) Date of filing: 29.01.1999
(51) Int. Cl.: H01S 3/06, H01S 3/094, B23K 26/00

(54) **Fiber laser**
Faserlaser
Laser à fibre

(30) Priority: 30.01.1998 JP 1870598; 06.02.1998 JP 2563298; 23.02.1998 JP 4010398; 09.12.1998 JP 35030698
(43) Date of publication of application: 04.08.1999
(73) Proprietor: HOYA CORPORATION, Shinjuku-ku Tokyo (JP)
(72) Inventor: Sekiguchi, Hiroshi, Akishima-shi, Tokyo (JP); Tanaka, Akiyoshi, Tama-shi, Tokyo (JP)
(74) Representative: Senior, Alan Murray

(56) References cited:
- EP-A- 0 840 410
- US-A- 3 273 072
- UEDA K ET AL: "Future of high-power fiber lasers" LASER PHYSICS,RU,MOSCOW, vol. 8, no. 3, 28 July 1997 (1997-07-28), pages 774-781, XP002092367 ISSN: 1054-660X
- PATENT ABSTRACTS OF JAPAN vol. 018, no. 092 (P-1693), 15 February 1994 (1994-02-15) & JP 05 297228 A (FUJITSU LTD), 12 November 1993 (1993-11-12)
- PROCEEDINGS OF THE SPIE, CONFERENCE ON LASER RESONATORS vol. 3267, 26 January 1998 - 27 January 1998, SAN JOSE, CA, USA, pages 14 - 22, XP002092368
- DATABASE INSPEC [Online] THE INSTITUTION OF ELECTRICAL ENGINEERS, STEVENAGE, GB Database accession no. 6048733
- DATABASE INSPEC [Online] THE INSTITUTION OF ELECTRICAL ENGINEERS, STEVENAGE, GB Database accession no. 5993632

## Description

### BACKGROUND OF THE INVENTION

### 1.Field of the Invention

The present invention relates to a laser device in which excitation light is supplied to a laser active material inside an optical fiber so that laser oscillation or amplification is conducted, and also to a laser apparatus using such a device.

### 2.Description of the Related Art

In the field of the optical communication or the laser machining, it is requested to develop a laser device which outputs a higher power and is more economical. Conventionally, an optical fiber laser device is known as a laser device having the possibility of satisfying this requirement. In an optical fiber laser device, when the core diameter, the difference between refractive indices of the core and the clad, and the like are adequately selected, the transverse mode of laser oscillation can be set as a single mode in a relatively easy manner.Furthermore, light can be confined in a high density so that interaction between the laser active material and light is enhanced. Since the interaction length can be made larger by prolonging the optical fiber, it is possible to generate at a high efficiency a laser beam which is spatially excellent in quality. Therefore, a laser beam of a high quality can be obtained in a relatively economical manner.

In order to attain a higher output power or a higher efficiency of laser light, excitation light must be efficiently introduced into a region (usually, a core portion) of an optical fiber to which laser activating ions or dyes, or other luminescence centers (hereinafter, referred to as "laser active material") are added. When the core diameter is set so as to satisfy the single mode waveguide conditions, the diameter is limited to ten and several microns or less. Usually, it is therefore difficult to efficiently introduce excitation light into a core of such a diameter. As means for overcoming this difficulty, a so-called double-clad fiber laser is proposed (for example, see H. Zenmer, U. Willamowski, A. Tunnermann, and, H. Welling, Optics Letters, Vol. 20, No. 6, pp. 578-580, March, 1995).

In a double-clad fiber laser, a first clad portion which is smaller in refractive index than the core portion is formed around the core portion, and a second clad portion having a smaller refractive index is disposed outside the first clad portion. According to this configuration, total reflection due to the difference between refractive indices of the first and second clad portions occurs so that excitation light introduced into the first clad portion propagates while maintaining the state where the light is confined in the first clad portion. During this propagation, the excitation light repeatedly passes through the core portion to excite the laser active material of the core portion. The first clad portion has an area which is larger than that of the core portion by about several hundreds to one thousand times. Therefore, a larger amount of excitation light can be introduced, so that a higher output power is enabled.

A double-clad fiber laser has advantages in that the oscillation efficiency is high, and that the oscillation transverse mode is single and stabilized. When a laser diode (hereinafter, referred to as "LD") is used, an output power of about several to 10 watts can be obtained. Consequently, it is possible to say that the output power is largely enhanced as compared with a fiber laser of the core excitation type which is previously used.

In the double-clad fiber laser, the excitation is end-face excitation due to one end or both ends of a fiber and hence there are only two places at the maximum through which excitation light can be introduced, thereby producing a problem in that the number of LDs for excitation cannot be increased. In other words, there is no way of increasing the output power of the fiber laser other than the increase of the brightness and output power of the LDs.

On the other hand, an LD array which is currently used for exciting a solid-state laser (including a fiber laser) has a structure in which about 10 to 20 LD chips having a light emission region of about 1 µm × 100 µm are laterally arranged so that the whole light emission region has a linear shape of about 1 µm × 1 cm and a converging lens converges light generated by the LDs, thereby forming a linear converging light source. This structure is realized by arranging a LD chip in adjacent to another LD chip in the width direction (the direction of the width of 100 µm) of the LD chip along which the converging property is originally inferior. In the state of the art, from the viewpoint of efficient cooling of the LDs, there is no way other than the arrangement of LD chips in the width direction (the direction of the width of 100 µm) of an LD chip. When an LD array is used as an end-face excitation light source for a double-clad fiber laser, therefore, output light of the LD array must be shaped by a prism or a reflecting mirror which has a complex shape, and then converged by a converging lens.

As means for overcoming such a difficulty, a method in which plural double-clad fiber lasers are bundled so as to increase the output power may be intuitionally obvious to those of skilled in the art. According to this method, an average output power may be increased in proportion to the number of bundled fiber lasers. However, the method has a problem in that each core portion is accompanied by a clad portion which is very larger than the core portion (by about 100 times in diameter) and hence the core portions respectively serving as luminescent points are thinly scattered in a space, thereby lowering the brightness. In other words, the method in which plural double-clad fiber lasers are bundled cannot be used in laser machining which requires high convergency, such as cutting or welding.

In place of the above-mentioned end-face excitation, side-face excitation which is widely used by usual solid-state lasers such as a YAG laser may be applied to an optical fiber laser device. In this case, however, there arises the following problem. Since an optical fiber is very thinner than a rod or a slab, most of excitation light is transmitted through the optical fiber, so that the efficiency of the laser is very low.

In such a fiber laser, since the refractive index profile of the clad portion has a step-like shape (the refractive index is constant), a step index difference exists between the clad portion and the portion outside the clad portion. When excitation light impinges on the fiber laser and propagates through the fiber, therefore, the light is easily scattered at the interface between the clad portion and the portion outside the clad portion, with the result that the fiber produces a large loss.

The use of a graded index fiber laser in which, in order to reduce the scattering loss at the interface, the refractive index of the clad portion is continuously reduced as moving toward the outer side may be easily contemplated. For example, the literature by T. Uchida, S. Yoshikawa, K. Washio, R. Tatsumi, K. Tsushima, I. Kitano, K. Koizumi, and Y. Ikeda (Jpn. J. Appl. Phys., Vol. 21, No. 1 (1973) 126) discloses a method in which a laser fiber is placed inside a reflector and excitation is caused by a flash lamp disposed in the periphery, thereby obtaining laser light. This method has drawbacks such as that the laser device is bulky, and that the laser efficiency is low.

### Summary of the Invention

The invention has been conducted under the above-mentioned circumstances.

It is an object of the invention to provide an optical fiber laser device which, while maintaining advantages of a fiber laser, i.e. excellent convergency, and thermal stability of the output power and the transverse mode, has a high productivity and can be stably used for a long term together with an excitation light source.

It is another object of the invention to provide a laser machining apparatus which uses the optical fiber laser device. It is a further object of the invention to provide an optical fiber laser device in which the efficiency of emitting light can be improved and the laser output power can be remarkably enhanced. It is a still further object of the invention to provide a laser machining apparatus which uses the optical fiber laser device.

Ueda et al.: "future of High-Power Fiber Lasers", 8 (1998) 3, pp. 774-778 discloses a fiber laser device according to the precharacterizing portion of claim 1.

Accordingly, the present invention provides a fiber laser device comprising:
an optical fiber which has a core containing a laser active material, and in which laser light is output from an end portion by exciting said active material;
an excitation light source which generates excitation light for exciting said laser active material; and a structural member which can confine the excitation light,
wherein at least a part of a side face of said optical fiber comprises a contacted portion which is contacted with said structural member directly or indirectly via an optical medium, said active material being excited by excitation light incident through the contacted portion, characterized in that said structural member has a shape around which said optical fiber can be wound so that the excitation light repeats total reflection at a surface, of said structural member and/or a surface of said optical medium contacted with said structural member, and the excitation light is taken out from said structural member to said optical fiber through a portion of the structural member contacted with the side face of said optical fiber, and in that said optical fiber is wound around a side face of said structural member having a columnar shape, so that the excitation light incident into said structural member repeats total reflection at the side face of said structural member and/or a surface of said optical medium contacted with the side face, and is absorbed by said active material contained in said core while moving along a spiral optical path around an axis of said structural member.

A further aspect of the device is a fiber laser device according to the invention, wherein the excitation light is incident on a lower face of said tubular structural member.

A further aspect of the device is a fiber laser device according to the invention, wherein at least a part of said tubular structural member has a shape in which an area of a section perpendicular to the axis of said structural member is continuously changed along a direction of the axis.

A further aspect of the device is a fiber laser device according to the invention, wherein the excitation light is incident on said structural member from one selected from: a prism which is closely contacted with the surface of said structural member; a prism which is closely contacted with the surface of said structural member via said optical medium; a groove which is formed directly in the surface of said structural member; a groove which is formed in said optical medium that is closely contacted with the surface of said structural member; a diffraction grating which is disposed on the surface of said structural member; and a diffraction grating which is disposed on said optical medium that is closely contacted with the surface of said structural member.

A further aspect of the device is a fiber laser device according to the invention, wherein said optical fiber is wound around said, structural member, and at least a part of said wound optical fiber is covered by an optical medium having a refractive index which is equal to or larger than a refractive index of said structural member.

An further aspect of the device is a fiber laser device according to the invention, wherein said optical fiber is wound around said structural member, and at least a part of said wound optical fiber is covered by an optical medium having a refractive index which is smaller than a refractive index of an outermost periphery of said optical fiber.

A further aspect of the invention is a laser machining apparatus comprising a fiber laser device according to the first aspect of the invention, and a converging optical system which converges laser light emitted from said fiber laser device on an object to be machined.

### BRIEF DESCRIPTION OF THE DRAWINGS

Fig. 1 is a perspective view schematically showing the configuration of a fiber laser device of Embodiment 1 of the invention.
Fig. 2 is an enlarged side view showing the vicinity of a prism 31 in Fig. 1.
Fig. 3 is an enlarged plan view showing the vicinity of the prism 31 in Fig. 1.
Fig. 4 is a view showing three-dimensionally (or in (x, y, z)) a locus of excitation light L₁ which is obtained by computer simulation, in the fiber laser device of Embodiment 1.
Fig. 5 is a view showing the locus of Fig. 4 as seen in the direction of z-axis (the axial direction of a glass cylindrical member 2).
Fig. 6 is a view showing the locus of Fig. 4 as seen in the direction of the side face (in the direction of y-axis).
Fig. 7 is a view showing the locus of Fig. 4 as seen from the side face (in the direction of x-axis).
Fig. 8 is a view showing three-dimensionally (or in (x, y, z)) a locus of the excitation light L₁ which is obtained by computer simulation, in the fiber laser device of Embodiment 1 in the case where θ is set to be 1°.
Fig. 9 is a view showing the locus of Fig. 8 as seen in the direction of z-axis (the axial direction of the glass cylindrical member 2).
Fig. 10 is a view showing the locus of Fig. 8 as seen in the direction of the side face (in the direction of y-axis).
Fig. 11 is a view showing three-dimensionally (or in (x, y, z)) a locus of the excitation light L₁ which is obtained by computer simulation, in the fiber laser device of Embodiment 1 in the case where θ is set to be 10°.
Fig. 12 is a view showing the locus of Fig. 11 as seen in the direction of z-axis (the axial direction of the glass cylindrical member 2).
Fig. 13 is a view showing the locus of Fig. 11 as seen in the direction of the side face (in the direction of y-axis).
Fig. 14 is a view showing a modification of Embodiment 1.
Fig. 15 is a partial section view schematically showing a fiber laser device of Embodiment 2 of the invention.
Fig. 16 is a perspective view schematically showing a fiber laser device of Embodiment 3 of the invention.
Fig. 17 is a view showing three-dimensionally (or in (x, y, z)) a locus of excitation light L₁ which is obtained by computer simulation, in the fiber laser device of Embodiment 3 in the case where θ is set to be 10°.
Fig. 18 is a view showing the locus of Fig. 17 as seen in the direction of z-axis (the axial direction of a glass cylindrical member 2).
Fig. 19 is a view showing the locus of Fig. 17 as seen in the direction of the side face (in the direction of y-axis).
Fig. 20 is a view showing the locus of Fig. 17 as seen from the side face (in the direction of x-axis).
Fig. 21 is a partial section view schematically showing a fiber laser device of Embodiment 4 of the invention.
Fig. 22 is a view schematically showing a fiber laser device of Embodiment 5 of the invention.
Fig. 23 is a partial section view of the fiber laser device of Fig. 22.

### Preferred Embodiments of the Invention

### (Embodiment 1)

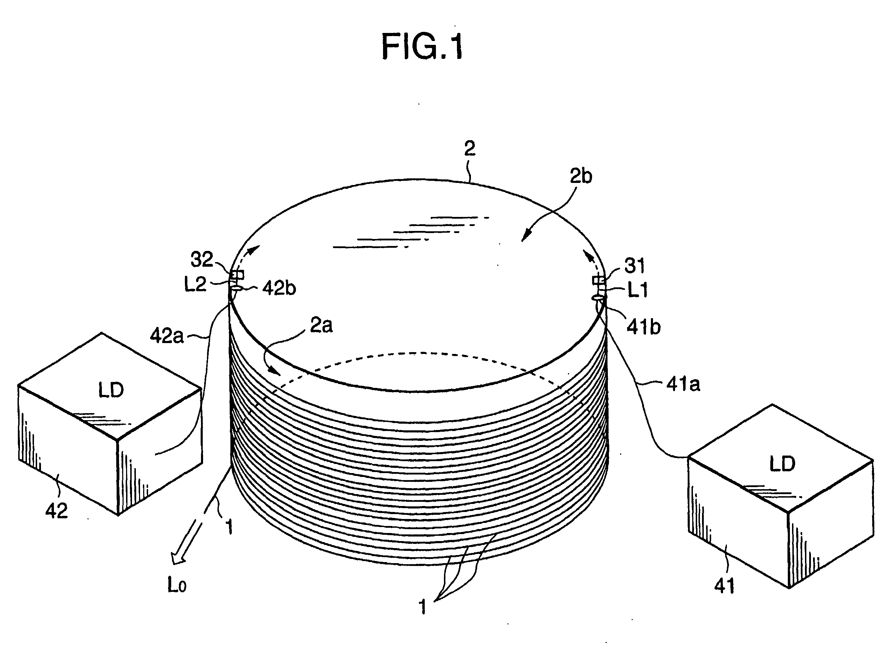

Fig. 1 is a perspective view schematically showing the configuration of a fiber laser device of Embodiment 1 of the invention. In the fiber laser device of the embodiment, as shown in Fig. 1, a laser fiber 1 is wound around the circumferential face 2a of a glass cylindrical member 2. Two excitation light introducing prisms 31 and 32 are attached to end portions of one end face (the upper end face in the figure) 2b in the axial direction of the glass cylindrical member 2. The end portions are in the vicinity of the outer periphery. Two semiconductor laser devices 41 and 42 are disposed which respectively generate excitation lights L₁ and L₂ to be introduced into the glass cylindrical member 2 via the prisms 31 and 32. The excitation lights L₁ and L₂ are guided to the vicinities of the incident faces of the prisms 31 and 32 via optical fibers 41a and 42a which are coupled to the semiconductor laser devices 41 and 42, respectively. The excitation lights L₁ and L₂ are converted into parallel beams by collimator lenses 41b and 42b and then impinge on the prisms 31 and 32, respectively.

The laser fiber 1 has a core diameter of 90µm, a clad diameter of 1,00µm, and a length of 50 m. In the laser fiber 1, Nd³⁺ ions are doped at the concentration of 0.5 at.% into the core portion. As the base material of the fiber, phosphate glass (for example, LHG-8 (trademark) of HOYA Corporation) is used. One end of the fiber is flatly polished and then coated with a multilayer film which has a reflective index of 98% or more with respect to a laser oscillation wavelength of 1.06 µm. The other end is coated with a multilayer film which has a reflective index of 10% with respect to a laser oscillation wavelength of 1.06 µm.

The glass cylindrical member 2 is a glass cylindrical member made of Pyrex glass and having a diameter of 10 cm and a length of 5 cm. The end faces and the outer peripheral face are optically polished.

The semiconductor laser devices 41 and 42 are fiber-coupled semiconductor laser devices which have an oscillation wavelength of 0.8 µm and an output power of 15 W. The oscillation laser light is output to the outside via the optical fibers 41a and 42a.

The collimator lenses 41b and 42b are aspherical lenses of a focal length of about 7 mm (for example, LM-A129 (trademark) of HOYA Optics Inc.).

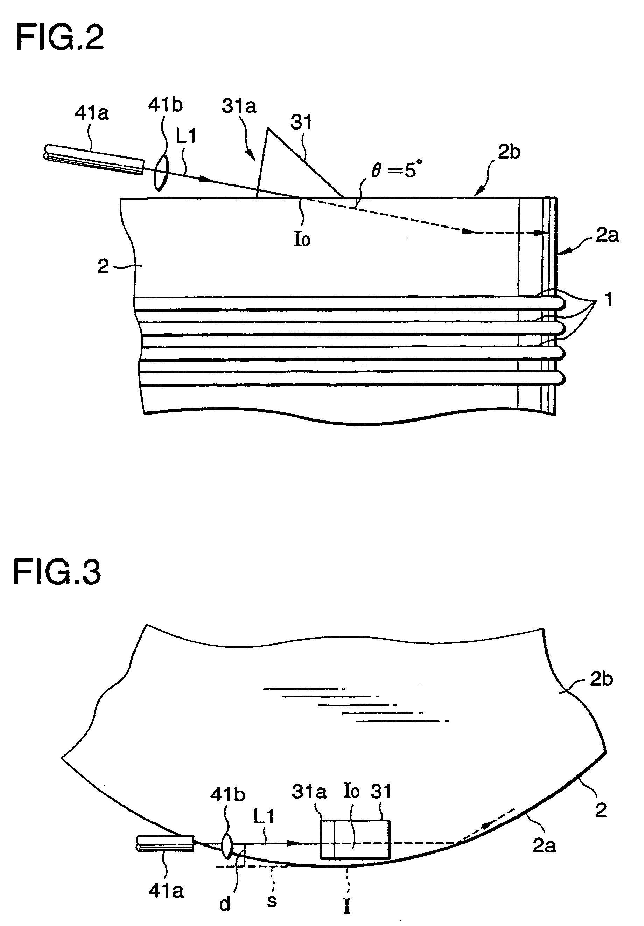

Fig. 2 is an enlarged side view showing the vicinity of the prism 31 in Fig. 1, and Fig. 3 is an enlarged plan view showing the vicinity of the prism 31 in Fig. 1. The vicinity of the prism 32 is configured in the same manner as that of the prism 31. As shown in Figs. 2 and 3, the prism 31 is a so-called triangular prism. One of the three faces except the side faces which are parallel to each other is used as an incident face 31a. The prism is secured by closely contacting another one face (lower face) with the end face 2b of the glass cylindrical member 2.

The excitation light L₁ emitted from the optical fiber 41a is converted into parallel beams by the collimator lens 41b, impinges on the incident face 31a of the prism 31, and is then introduced into the glass cylindrical member 2 through one point I₀ of the end face 2b of the glass cylindrical member 2. The angle θ formed by the excitation light L₁ incident on the glass cylindrical member 2 and the end face 2b of the glass cylindrical member 2 is set to be about 5°. As shown in Fig. 3, the direction of the excitation light L₁ in a plan view is parallel to a tangential line S at a point I of a contour circle of the end face 2b of the glass cylindrical member 2. At the point I, the line connecting the center of the glass cylindrical member 2 and the point I₀ intersects with the contour circle. The distance d between the excitation light L₁ and the tangential line S is set to be about 1 mm.

The excitation light L₁ incident on the glass cylindrical member 2 reaches the inner side face of the circumferential face 2a, and is totally reflected therefrom by the difference between refractive indices of the glass and the air. The excitation light L₁ which has been totally reflected straightly advances again so as to repeat total reflection from the inner side face of the circumferential face 2a. The excitation light advances in the glass cylindrical member 2 in a downward direction in the figure, while moving in the vicinity of the inner side face of the circumferential face 2a and along a spiral locus, and then reaches the end face (bottom face) which is opposite to the end face 2b. The excitation light is then totally reflected from the end face. Thereafter, the excitation light advances toward the end face 2b along a substantially reverse locus. In this way, the excitation light is confined in the glass cylindrical member 2 while repeating total reflection in the glass cylindrical member 2. The above is applicable also to the excitation light L₂ in a strictly same manner.

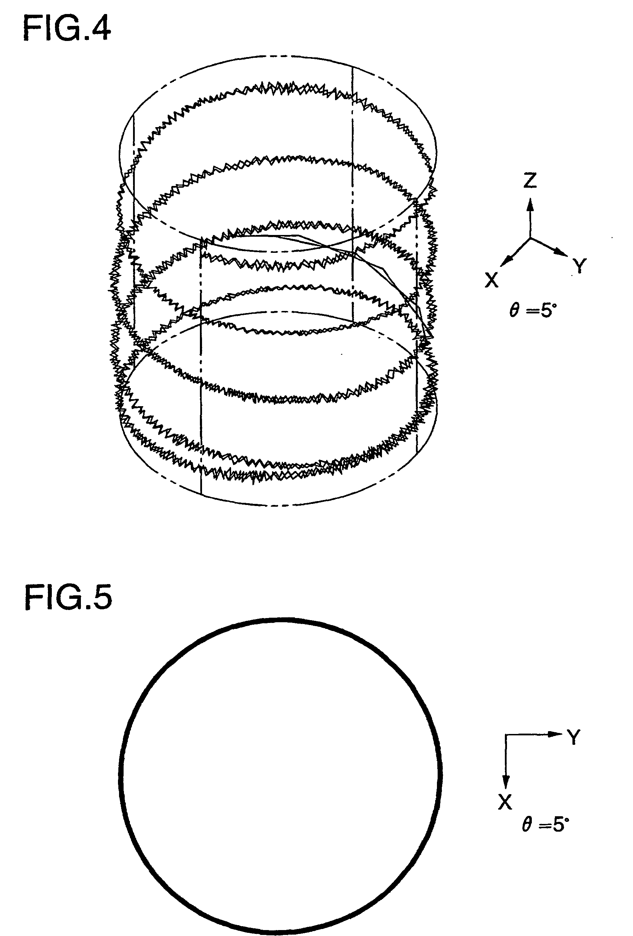

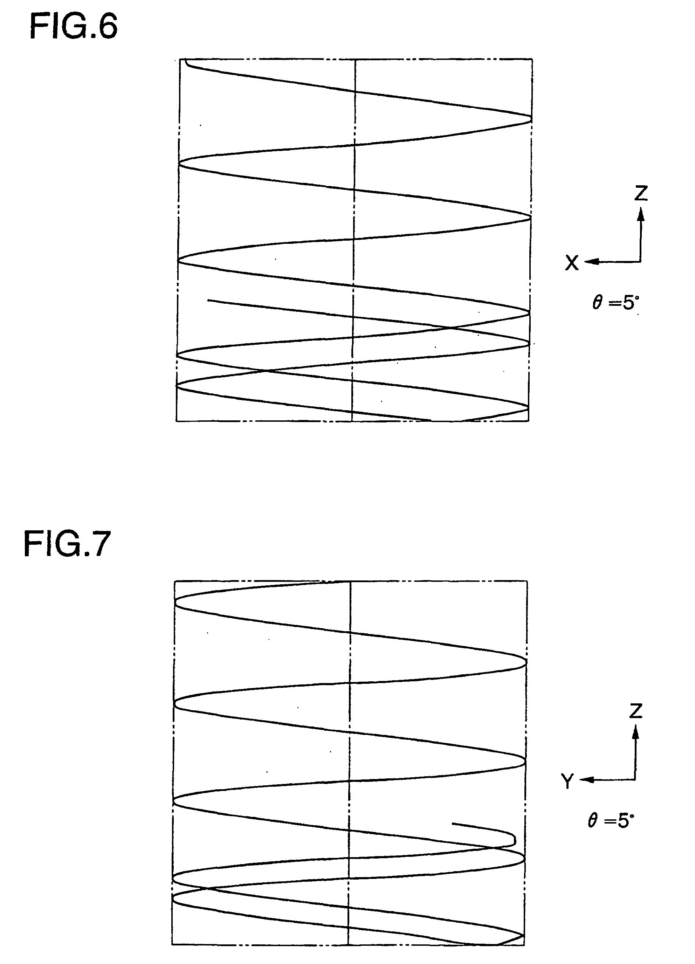

Fig. 4 is a view showing three-dimensionally (or in (x, y, z)) the locus of the excitation light L₁ which is obtained by computer simulation, Fig. 5 is a view showing the locus of Fig. 4 as seen in the direction of z-axis (the axial direction of the glass cylindrical member 2), Fig. 6 is a view showing the locus of Fig. 4 as seen in the direction of the side face (in the direction of y-axis), and Fig. 7 is a view showing the locus of Fig. 4 as seen from the side face (in the direction of x-axis). The laser fiber 1 is wound around the outer peripheral face 2a of the glass cylindrical member 2. In other words, the clad portion of the laser fiber 1 is closely contacted or, i.e., partially optically coupled with the outer peripheral face 2a. The refractive index of the glass cylindrical member 2 is substantially equal to that of the clad portion of the laser fiber 1. When the excitation light L₁ reaches the contacted part, therefore, the excitation light is introduced into the laser fiber 1 without being totally reflected. Consequently, the excitation light L₁ which has once confined in the glass cylindrical member 2 is introduced at a high efficiency into the laser fiber 1 while circulating in the glass cylindrical member 2.

In the embodiment, laser light L₀ of a wavelength of 1.06 µm was obtained at a high output power of 8 W from the output end of the laser fiber 1.

A converging lens system (focal length: 10 mm) which converges laser light output from the fiber laser device was disposed so as to constitute a laser machining apparatus. As a result, the energy which is 90% or more of the output power was able to be converged into a diameter of 100 µm. In this case, the converging diameter of the output laser beam was stabilized irrespective of the laser output power and the thermal state.

In the fiber laser device of the embodiment, the laser fiber 1 is wound at a large number of turns around the outer peripheral face of the glass cylindrical member 2, and the excitation light is introduced into the glass cylindrical member 2 so as to attain a state where the excitation light is confined in the glass cylindrical member 2 while being repeatedly totally reflected mainly from the inner side face of the outer peripheral face. Therefore, excitation at a very high efficiency is enabled.

Since the excitation light advances in the vicinity of the inner side face of the circumferential face 2a of the glass cylindrical member 2 and along a spiral locus, the confined light beam does not interfere with the light source, the incident port for the light beam, etc. Therefore, a large number of light sources can be used, so that the laser output power can be further enhanced.

The above-mentioned output value of the embodiment is not a limit of the fiber laser device. Since the semiconductor laser array having a small number of laser elements was prepared for excitation, an output power of 8 W only was obtained. It is expected that the upper limit of the laser device is 1 kW or more.

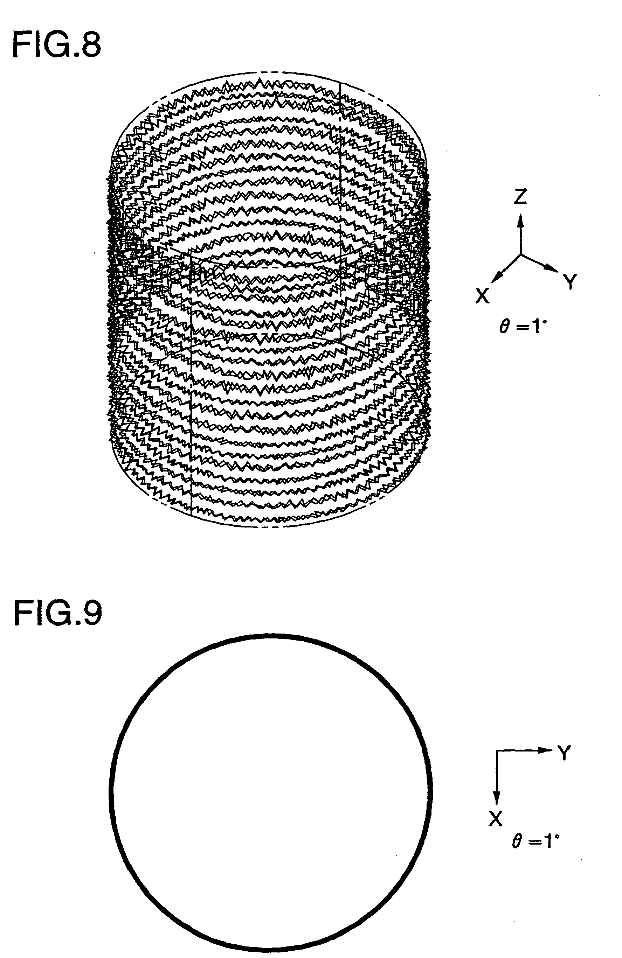

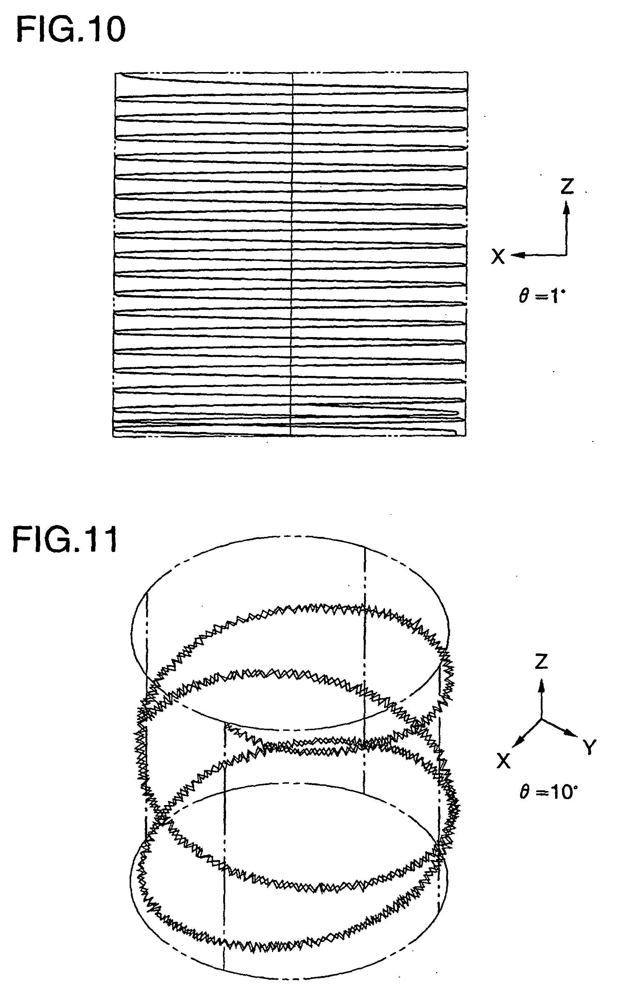

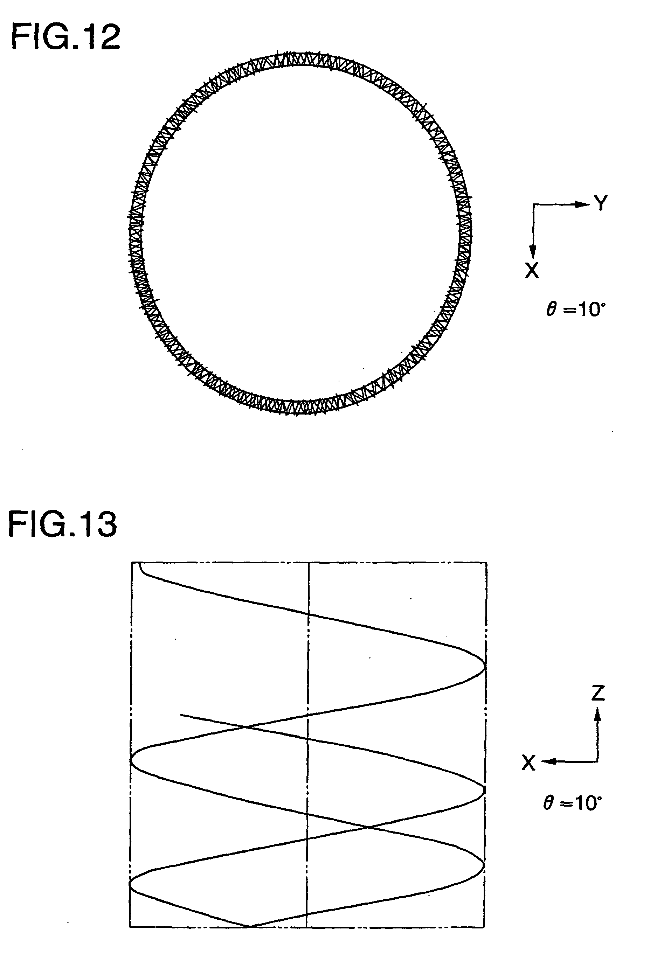

In the embodiment, the angle θ formed by the excitation light L₁ or L₂ and the end face 2b is set to be 5°. The angle may have another value. When θ is set to be a smaller value, for example, the pitch of the spiral becomes small. When θ is set to be a larger value, the pitch of the spiral becomes large. Figs. 8, 9, and 10 are views showing a locus of the excitation light in the glass cylindrical member 2 in the case where θ is set to be 1°, and Figs. 11, 12, and 13 are views showing a locus of the excitation light in the glass cylindrical member 2 in the case where θ is set to be 10°. The angle θ may have an appropriate value in accordance with the conditions such as the kind of the laser fiber 1, the material of the glass cylindrical member 2, and the wavelength of the excitation light.

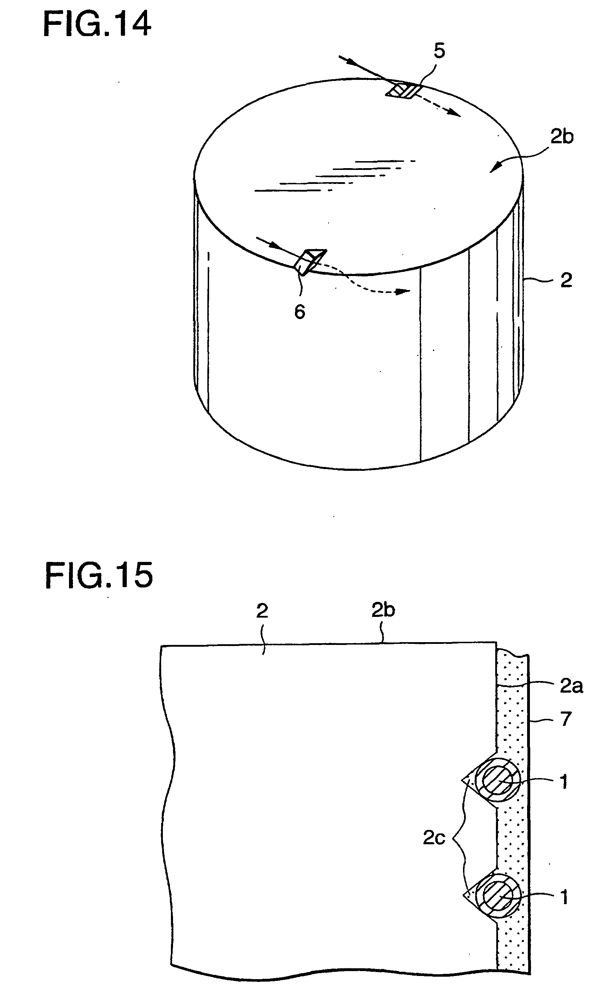

In the embodiment, the excitation light is introduced into the glass cylindrical member 2 via the prisms 31 and 32, so that the loss due to the surface reflection in the introduction is reduced. Alternatively, in place of the prisms 31 and 32, a diffraction grating 5 may be used or a groove 6 may be formed as shown in Fig. 14.

In the embodiment, the laser fiber 1 is wound around the glass cylindrical member 2 in a single layer. Alternatively, the laser fiber may be wound in plural layers.

In the embodiment, the glass cylindrical member is used. The material is not restricted to glass, and any material may be used as far as it is transparent with respect to the excitation light. For example, plastics or the like may be used.

### (Embodiment 2)

Fig. 15 is a partial section view schematically showing a fiber laser device of Embodiment 2 of the invention. In the embodiment, as shown in Fig. 15, a spiral (screw-like) grooving process is applied at a pitch of 0.2 mm on the outer peripheral face 2a of the glass cylindrical member 2 to form a spiral groove 2c. The laser fiber 1 is wound while being fitted into the spiral groove 2c. A transparent adhesive agent layer 7 is formed on the outer peripheral face 2a so as to cover the wound laser fiber 1. The other configuration is identical with that of Embodiment 1, and hence its detailed description is omitted.

In the embodiment, an excellent result of a laser output power of 9 W at a wavelength of 1.06 µm was obtained. Alternatively, in place of the transparent adhesive agent layer 7, a layer of glass or another resin may be disposed. In the embodiment, the reflective index of transparent adhesive agent layer, glass or other resin layers as an optical medium is preferably equal or nearly equal as that of the glass cylindrical member 2. Further these optical mediums are also used as a member without a spiral groove. Also the embodiment may be modified in the same manner as Embodiment 1.

### (Embodiment 3)

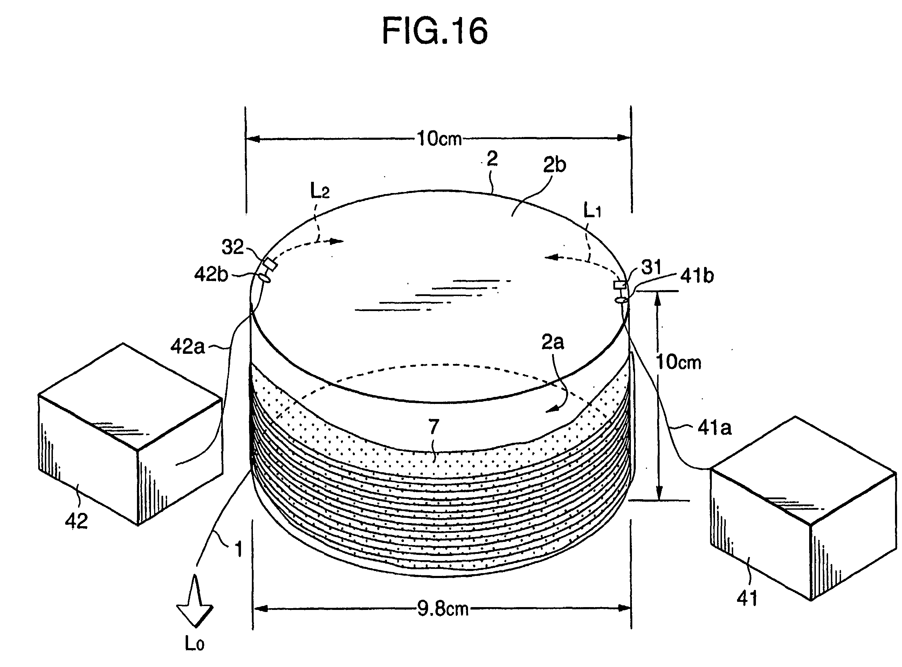

Fig. 16 is a perspective view schematically showing the configuration of a fiber laser device of Embodiment 3 of the invention. As the glass cylindrical member 2 in Embodiment 1, a tapered glass cylindrical member is used in which the diameter of the upper end in the figure is 10 cm and that of the lower end is 9.8 cm. The laser fiber 1 is wound around a portion of the glass cylindrical member 2 which portion is in the lower side in the figure. The transparent adhesive agent layer 7 is formed on the outer peripheral face 2a so as to cover the wound laser fiber 1. The other configuration is identical with that of Embodiment 1, and hence its detailed description is omitted.

In the embodiment, since the glass cylindrical member 2 is configured by a tapered glass cylindrical member, the excitation light advances along a locus in which the pitch is smaller as moving more downward in the direction along which the laser fiber 1 is wound.

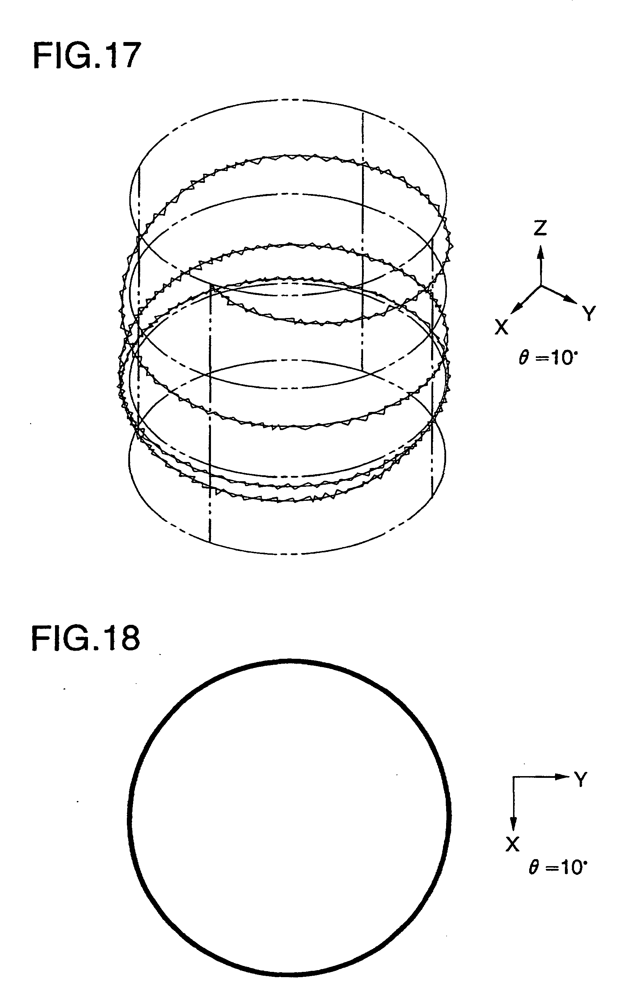

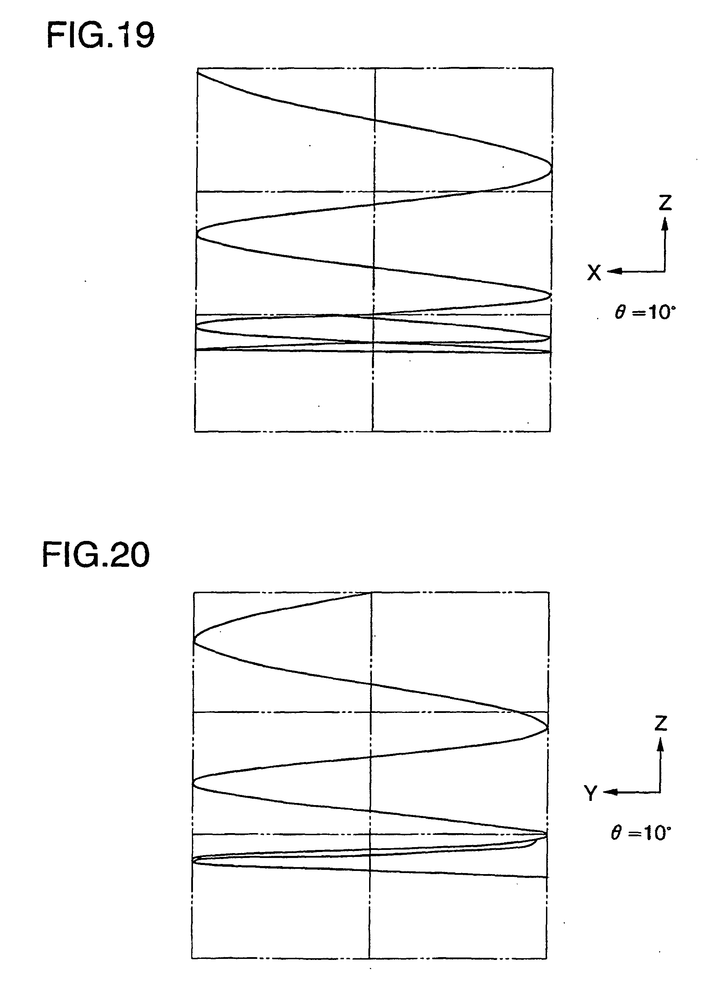

Fig. 17 is a view showing three-dimensionally (or in (x, y, z)) the locus of the excitation light L₁ which is obtained by computer simulation in the case where the angle θ of the fiber laser device of Embodiment 3 is set to be 10°, Fig. 18 is a view showing the locus of Fig. 17 as seen in the direction of z-axis (the axial direction of the glass cylindrical member 2), Fig. 19 is a view showing the locus of Fig. 17 as seen in the direction of the side face (in the direction of y-axis), and Fig. 20 is a view showing the locus of Fig. 17 as seen from the side face (in the direction of x-axis).

When the glass cylindrical member 2 is configured by a tapered glass cylindrical member, the excitation light advances basically along the locus shown in Fig. 17 although the changing state of the pitch of the spiral is varied by varying the angle θ.

In the embodiment, θ was set to be 5°. As a result, the excitation light advances along a locus in which the excitation light once stagnates in the vicinity of a position which is downward separated by 8 cm from the incident face (the end face 2b), and then returns toward the incident face. Therefore, the embodiment attained an effect that the excitation efficiency in the vicinity of the position where the excitation light once stagnates is further enhanced, and an excellent result of a laser output power of 11 W at a wavelength of 1.06 µm was obtained.

A converging lens system (focal length: 10 mm) which converges the laser light output from the fiber laser device was disposed so as to constitute a laser machining apparatus. As a result, the energy which is 90% or more of the output power was able to be converged into a diameter of 200 µm. In this case, the converging diameter of the output laser beam was stabilized irrespective of the laser output power and the thermal state.

In the embodiment, the glass cylindrical member 2 has a simple tapered form in which the diameter is linearly reduced. Alternatively, the glass cylindrical member may have a tapered form in which the diameter is reduced along a curve of a function of higher order, or a form in which the diameter is constant in a range ending at a midpoint and a tapered shape is formed in another range starting from the midpoint.

### (Embodiment 4)

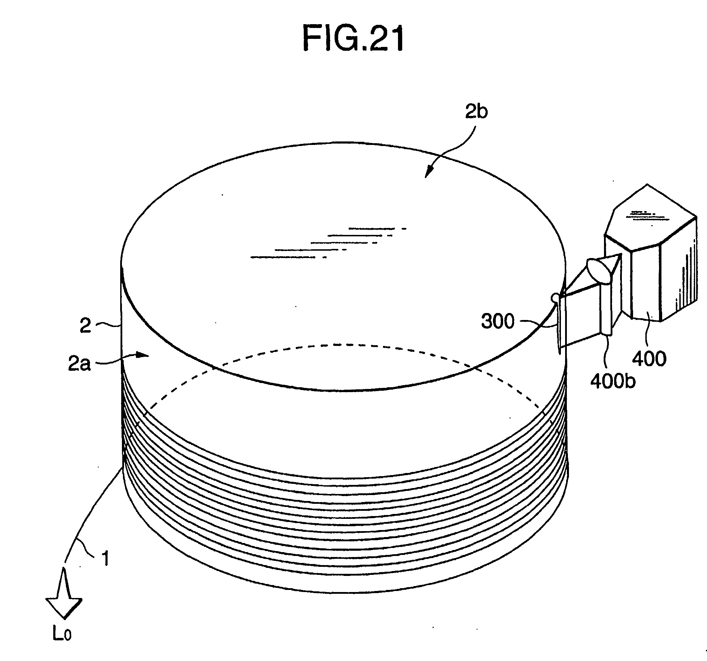

Fig. 21 is a view schematically showing the configuration of a fiber laser device of Embodiment 4 of the invention. The embodiment is configured in the same manner as Embodiment 3 except that incidence of the excitation light into the glass cylindrical member 2 is performed through an incident groove 300 formed in the outer peripheral face 2a in place of the end face 2b. Hereinafter, only different portions will be described and description of the identical portions is omitted.

The incident groove 300 is a V-shape groove which is formed in a portion of the outer peripheral face 2a of the glass cylindrical member 2 around which the laser fiber 1 is not wound. The groove has a length of about 10 mm, a width of about 1 mm, and a depth of about 0.7 mm. As a device for generating the excitation light to be incident through the incident groove 300, a semiconductor laser array 400 of an oscillation wavelength of 0.8 µm and an output power of 20 W and having a cylindrical lens 400b was used. In the embodiment, although not illustrated, two incident grooves 300 were disposed and the excitation light was introduced into the glass cylindrical member 2 by using two semiconductor laser arrays 400.

As a result, a relatively excellent result of a laser output power of 6 W at a wavelength of 1.06 µm was obtained. A converging lens system (focal length: 10 mm) which converges the laser light output from the fiber laser device was disposed so as to constitute a laser machining apparatus. As a result, the energy which is 90% or more of the output power was able to be converged into a diameter of 200 µm. In this case, the converging diameter of the output laser light was stabilized irrespective of the laser output power and the thermal state.

### (Embodiment 5)

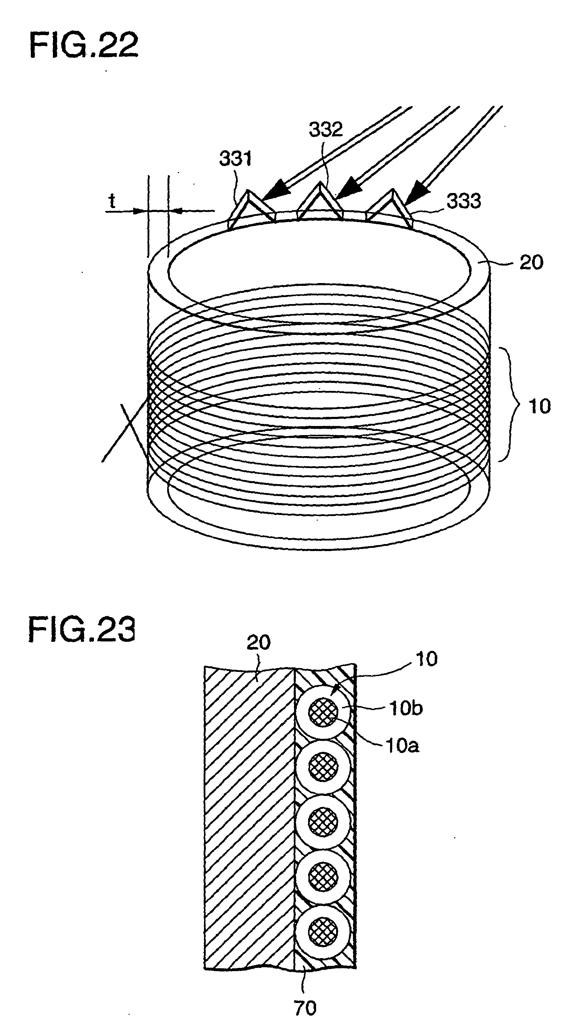

Fig. 22 is a view schematically showing a fiber laser device of Embodiment 5 of the invention, and Fig. 23 is a partial section view of the fiber laser device of Fig. 22. In the embodiment, as shown in the figures, a laser fiber 10 is wound around the outer peripheral face 20a of a glass round pipe 20, and fixed by forming a resin layer 70 on the outer peripheral face 20a so as to cover the laser fiber 10. Three excitation light introducing prisms 331, 332, and 333 are disposed on one end face of the glass round pipe 20, i.e., on the upper end face 20b in an optically close manner. The embodiment is different from the above-described embodiments, mainly in that the glass round pipe 20 is used in place of the glass cylindrical member 2.

The glass round pipe 20 is a round pipe which has an outer diameter of 10 cm, a length of 10 cm, and a thickness t of 1.5 mm, and which is made of quartz glass. The upper and lower end faces of the glass round pipe 20 are formed so as to be parallel with a plane perpendicular to the center axis of the round pipe, and are mirror-polished. The outer peripheral face also is mirror-polished.

In the laser fiber 10 wound around the outer peripheral face 20a of the glass round pipe 20, the diameter of the core portion 10a is 90 µm, that of the clad portion 10b is 125 µm, and the length is 150 m. In the laser fiber, Nd³⁺ ions are doped at the concentration of 0.2 at.% into the core portion 10a. The base material of the fiber is quartz glass. One end face of the laser fiber in the longitudinal direction is flatly polished and then coated with a multilayer film. The end face has a reflective index of 98% or more with respect to a laser oscillation wavelength of 1.06 µm. The other end face is a face which is obtained only by vertically breaking the fiber and has not undergone a coating process or the like. The other end face has a reflective index of about 4% with respect to a laser oscillation wavelength of 1.06 µm.

As the resin layer 70, used is an ultraviolet curing resin (for example, OG125 of EPOXY TECHNOLOGY, Inc. of the U.S.A.) having a refractive index which is similar to that of 1.47 of quartz glass. Alternatively, glass (having a refractive index which is similar to that of the glass round pipe) may be used.

Preferably, the refractive index of an optical material (for example, the resin layer) is equal to that of a structural member (for example, the glass round pipe 20). When an optical material is lower in refractive index than a structural member, the excitation light entering the structural member (the quartz glass) is confined (totally reflected) by the optical medium (the resin layer)(laser fiber), so that the laser fiber is not excited. It is preferable to set the refractive index of an optical member to be equal to or larger than that of the core of the optical fiber. According to this configuration, the excitation light can be efficiently guided to the core.

Although not illustrated, three fiber-coupled semiconductor laser devices which have an oscillation wavelength of 0.8 µm and an output power of 15 W are used as an excitation light generating source which is used for exciting the fiber laser device. A lens is attached to a light emission portion of each of the fiber-coupled semiconductor laser devices. The emission light for excitation is converged into a beam of a diameter of 600 µm. The resulting beams are introduced into the glass round pipe 20 through the above-mentioned excitation light introducing prisms 331, 332, and 333, respectively.

The angle of incidence of each excitation light onto the upper end face 20b of the glass round pipe 20 is about 5°. The direction of each excitation light in the case where the excitation light is projected from the direction of the center axis of the round pipe is substantially parallel to a tangential line to the outer peripheral face at the point where the line connecting the center of the round pipe and the incident point intersects with the outer peripheral face 20a in a plane containing the upper end face.

As a result, a very excellent result of a laser output power of 17 W at a wavelength of 1.06 µm was obtained. This output value is not a limit of the fiber laser device. Since the semiconductor laser devices which were prepared for excitation were small in number, an output power of 17 W only was obtained. When a larger number of semiconductor laser devices are used, a higher output power can be obtained. It is expected that the upper limit of the fiber laser device of the embodiment is 1 kW or more.

The output of the fiber laser device was converged by a lens system of a focal length of 10 mm. As a result, the energy which is 90% or more of the output power was able to be converged into a diameter of 200 µm. The converging diameter of the fiber laser device was always stabilized irrespective of the laser output power and the thermal state.

In the embodiment, since a glass round pipe is used as the structural member for confining the excitation light, the heat radiation property is improved. This is advantageous to a high average output operation. As the glass round pipe is thinner, the heat radiation property is more excellent, and the advantage of the increased excitation efficiency of the laser fiber is further enhanced. In this way, it is preferable to form the structural member for confining the excitation light into a hollow shape having an opening. When a structural member having such a shape is used, the heat radiation property is improved, and hence this is advantageous to a high average output operation. In this case, any hollow shape may be basically employed.

Since, in place of phosphate laser glass, quartz glass was used as the base material of the laser fiber 10, the resistance to laser light is improved. Therefore, the embodiment is advantageous also to a high brightness operation. It is a matter of course that a laser fiber of quartz glass may be used also in Embodiments 1 to 4 in the same manner as this embodiment.

In the embodiment, the system in which the excitation light incident port is configured by attaching a prism is employed. Alternatively, a process of forming a V-groove may be applied on an end face of the glass round pipe or a diffraction grating may be formed. In other words, any kind of an excitation light incident port may be used as far as the excitation light can be incident on it.

As the fiber laser device serving as an excitation light generating source, fiber-coupled devices were used. Alternatively, LD chips or an LD array to which collimator lenses are attached may be used.

In the embodiments described above, a glass cylindrical member or a glass round pipe is used as a structural member in which excitation light can be confined. Any structural member may be used as far as it has a similar function. A semiconductor laser device is used as the excitation light generating source. A laser device of another kind or a light generating device other than a laser device may be used.

As described above in detail, in the above invention, a part of a side face of a laser fiber is contacted directly or indirectly with a structural member in which excitation light for exciting the laser fiber can be confined, and excitation light is introduced into the laser fiber through the contacted portion so as to perform excitation. According to this configuration, excitation light from plural excitation light sources can be confined in the structural member so as to be absorbed into the laser fiber, thereby enabling increase of the output power of a fiber laser device which is difficult to be realized in the prior art.

This invention is applicable not only to laser machining apparatus but also to another apparatus such as laser communication apparatus. In this invention, Fiber Laser device represents oscillator, amplifier, combination of oscillator and amplifier, and combination of oscillator or amplifier and other element.

## Claims

1. A fiber laser device comprising:
an optical fiber (1, 10) which has a core containing a laser active material, and in which laser light is output from an end portion by exciting said active material;
an excitation light source (LD, 41, 42) which generates excitation light for exciting said laser active material; and
a structural member (2, 20) which can confine the excitation light,
wherein at least a part of a side face of said optical fiber comprises a contacted portion which is contacted with said structural member (2, 20) directly or indirectly via an optical medium (7, 70), said active material being excited by excitation light incident through the contacted portion,
**characterized in that** said structural member (2, 20) has a shape around which said optical fiber (1, 10) can be wound so that the excitation light repeats total reflection at a surface (2a), of said structural member and/or a surface of said optical medium (7, 70) contacted with said structural member (2, 20), and the excitation light is taken out from said structural member (2, 20) to said optical fiber (1, 10) through a portion of the structural member (2, 20) contacted with the side face of said optical fiber (1, 10),
and **in that** said optical fiber (1, 10) is wound around a side face (2a) of said structural member (2, 20) having a columnar shape, so that the excitation light incident into said structural member (2, 20) repeats total reflection at the side face (2a) of said structural member (2, 20) and/or a surface of said optical medium (7, 70) contacted with the side face, and is absorbed by said active material contained in said core while moving along a spiral optical path around an axis of said structural member (2, 20).

2. The fiber laser device according to claim 1, wherein the excitation light is incident on a lower face of said structural member, which may be tubular.

3. The fiber laser device according to claim 1 or 2, wherein at least a part of said tubular structural member (2, 20) has a shape in which an area of a section perpendicular to the axis of said structural member (2, 20) is continuously changed along a direction of the axis.

4. The fiber laser device according to any preceding claim, wherein the excitation light is incident on said structural member from one selected from: a prism (31, 32, 331, 332, 333) which is closely contacted with the surface of said structural member (2, 20); a prism which is closely contacted with the surface of said structural member via said optical medium; a groove (6, 300) which is formed directly in the surface of said structural member (2, 20); a groove which is formed in said optical medium that is closely contacted with the surface of said structural member; a diffraction grating (5) which is disposed on the surface of said structural member (2, 20); and a diffraction grating which is disposed on said optical medium that is closely contacted with the surface of said structural member.

5. The fiber laser device according to any preceding claim, wherein said optical fiber (1, 10) is wound around said structural member (2, 20), and wherein at least a part of said wound optical fiber is covered by an optical medium (7, 70) having a refractive index which is equal to or larger than a refractive index of said structural member (2, 20).

6. The fiber laser device according to any one of claims 1 to 4, wherein said optical fiber is wound around said structural member, and at least a part of said wound optical fiber is covered by an optical medium (7, 70) having a refractive index which is smaller than a refractive index of an outermost periphery of said optical fiber (1, 10).

7. A laser machining apparatus comprising a fiber laser device according to any preceding claim, and a converging optical system which converges laser light emitted from said fiber laser device on an object to be machined.

## Patentansprüche

1. Faserlaser-Vorrichtung, umfassend:
eine optische Faser (1, 10), die einen Kern aufweist, der ein laseraktives Material enthält, und in der Laserlicht durch Erregen des aktiven Materials von einem Endabschnitt abgegeben wird;
eine Erregungs-Lichtquelle (LD, 41, 42), die Erregungs-Licht zum Erregen des laseraktiven Materials erzeugt; und
ein strukturelles Element (2, 20), welches das Erregungs-Licht eindämmen kann,
wobei zumindest ein Teil einer Seitenoberfläche der optischen Faser einen Berührungsabschnitt umfasst, der direkt oder indirekt über ein optisches Medium (7, 70) mit dem strukturellen Element (2, 20) in Berührung steht, wobei das aktive Material durch Erregungs-Licht, welches durch den Berührungsabschnitt einfällt, erregt wird,
**dadurch gekennzeichnet, dass** das strukturelle Element (2, 20) eine Form aufweist, um die die optische Faser (1, 10) derart gewickelt werden kann, dass das Erregungs-Licht die vollständige Reflexion an einer Oberfläche (2a) des strukturellen Elements und/oder einer Oberfläche des optischen Mediums (7, 70), welches in Berührung mit dem strukturellen Element (2, 20) steht, wiederholt, und das Erregungs-Licht von diesem strukturellen Element (2, 20) zu der optischen Faser (1, 10) durch einen Abschnitt des strukturellen Elements (2, 20), der mit der Seitenoberfläche der optischen Faser (1, 10) in Berührung steht, abgenommen wird,
und dass die optische Faser (1, 10) um eine Seitenoberfläche (2a) des strukturellen Elements (2, 20), welches eine säulenförmige Form aufweist, derart gewickelt ist, dass das Erregungs-Licht, welches in das strukturelle Element (2, 20) einfällt, eine vollständige Reflexion an der Seitenoberfläche (2a) des strukturellen Elements (2, 20) und/oder einer Oberfläche des optischen Mediums (7, 70), welches mit der Seitenoberfläche in Berührung steht, wiederholt, und durch das aktive Material, welches in dem Kern enthalten ist, absorbiert wird, während es sich entlang eines spiralförmigen optischen Pfads um eine Achse des strukturellen Elements (2, 20) bewegt.

2. Faserlaser-Vorrichtung gemäß Anspruch 1, wobei das Erregungs-Licht auf eine untere Oberfläche des strukturellen Elements, welches röhrenförmig sein kann, einfällt.

3. Faserlaser-Vorrichtung gemäß Anspruch 1 oder 2, wobei zumindest ein Teil des röhrenförmigen strukturellen Elements (2, 20) eine Form aufweist, bei der ein Bereich eines Querschnitts senkrecht zur Achse des strukturellen Elements (2, 20) kontinuierlich entlang einer Achsenrichtung verändert wird.

4. Faserlaser-Vorrichtung gemäß einem der voranstehenden Ansprüche, wobei das Erregungs-Licht auf das strukturelle Element von einer der nachfolgenden Einrichtungen einfällt: ein Prisma (31, 32, 331, 332, 333), welches eng in Kontakt mit der Oberfläche des strukturellen Elements (2, 20) steht; ein Prisma, welches eng in Kontakt mit der Oberfläche des strukturellen Elements über das optische Medium steht; eine Nut (6, 300), welche direkt in die Oberfläche des strukturellen Elements (2, 20) eingeformt ist; eine Nut, welche in das optische Medium eingeformt ist, welches eng in Kontakt mit der Oberfläche des strukturellen Elements steht; ein Beugungsgitter (5), welches auf der Oberfläche des strukturellen Elements (2, 20) angeordnet ist; sowie ein Beugungsgitter, welches auf dem optischen Medium angeordnet ist, welches in engem Kontakt mit der Oberfläche des strukturellen Elements steht.

5. Faserlaser-Vorrichtung gemäß einem der voranstehenden Ansprüche, wobei die optische Faser (1, 10) um das strukturelle Element (2, 20) herumgewickelt ist, und wobei zumindest ein Teil der gewickelten optischen Faser mittels eines optischen Mediums (7,70) abgedeckt ist, welches einen Brechungsindex aufweist, der gleich oder größer als der Brechungsindex des strukturellen Elements (2, 20) ist.

6. Faserlaser-Vorrichtung gemäß einem der Ansprüche 1 bis 4, wobei die optische Faser um das strukturelle Element herumgewickelt ist und zumindest ein Teil der gewickelten optischen Faser mittels eines optischen Mediums (7, 70) abgedeckt ist, welches einen Brechungsindex aufweist, der kleiner als der Brechungsindex eines äußersten Umfangs der optischen Faser (1, 10) ist.

7. Laser-Bearbeitungsvorrichtung, umfassend eine Faserlaser-Vorrichtung gemäß einem der voranstehenden Ansprüche sowie ein konvergierendes optisches System, welches von der Faserlaser-Vorrichtung auf ein zu bearbeitendes Objekt emittiertes Laserlicht konvergiert.

## Revendications

1. Dispositif de laser à fibre comprenant :
une fibre optique (1, 10) qui comporte une âme qui contient un matériau actif de laser et dans laquelle une lumière laser est émise en sortie depuis une portion d'extrémité en excitant ledit matériau actif ;
une source de lumière d'excitation (LD, 41, 42) qui génère une lumière d'excitation pour exciter ledit matériau actif de laser ; et
un élément structurel (2, 20) qui peut confiner la lumière d'excitation,
dans lequel au moins une partie d'une face latérale de ladite fibre optique comprend une portion en contact qui est mise en contact avec ledit élément structurel (2, 20) directement ou indirectement via un milieu optique (7, 70), ledit matériau actif étant excité par une lumière d'excitation qui arrive en incidence au travers de la portion en contact,
**caractérisé en ce que** ledit élément structurel (2, 20) présente une forme autour de laquelle ladite fibre optique (1, 10) peut être enroulée de telle sorte que ladite lumière d'excitation répète une réflexion totale au niveau d'une surface (2a) dudit élément structurel et/ou au niveau d'une surface dudit milieu optique (7, 70) en contact avec ledit élément structurel (2, 20), **en ce que** la lumière d'excitation est extraite depuis ledit élément structurel (2, 20) jusqu'à ladite fibre optique (1, 10) par l'intermédiaire d'une portion de l'élément structurel (2, 20) en contact avec la face latérale de ladite fibre optique (1, 10) et **en ce que** ladite fibre optique (1, 10) est enroulée autour d'une face latérale (2a) dudit élément structurel (2, 20) présentant une forme colonnaire de telle sorte que la lumière d'excitation qui arrive en incidence dans ledit élément structurel (2, 20) répète une réflexion totale au niveau de la face latérale (2a) dudit élément structurel (2, 20) et/ou au niveau d'une surface dudit milieu optique (7, 70) en contact avec la face latérale et soit absorbée par ledit matériau actif qui est conteau dans ladite âme tout en réalisant un déplacement le long du chemin optique en spirale autour d'un axe dudit élément structurel (2, 20).

2. Dispositif de laser à fibre selon la revendication 1, dans lequel la lumière d'excitation arrive en incidence sur la face inférieure dudit élément structurel, qui peut être tubulaire.

3. Dispositif de laser à fibre selon la revendication 1 ou 2, dans lequel au moins une partie dudit élément structurel tubulaire (2, 20) présente une forme selon laquelle une aire d'une section qui est perpendiculaire à l'axe dudit élément structurel (2, 20) est modifiée en continu suivant une direction de l'axe.

4. Dispositif de laser à fibre selon l'une quelconque des revendications précédentes, dans lequel la lumière d'excitation arrive en incidence sur ledit élément structurel depuis un élément sélectionné parmi : un prisme (31, 32, 331, 332, 333) qui est en contact étroit avec la surface dudit élément structurel (2, 20) ; un prisme qui est en contact étroit avec la surface dudit élément structurel via ledit milieu optique ; une gorge (6, 300) qui est formée directement dans la surface dudit élément structurel (2, 20) ; une gorge qui est formée dans ledit milieu optique qui est en contact étroit avec la surface dudit élément structurel ; un réseau de diffraction (50) qui est disposé sur la surface dudit élément structurel (2, 20) ; et un réseau de diffraction qui est disposé sur ledit milieu optique qui est en contact étroit avec la surface dudit élément structurel.

5. Dispositif de laser à fibre selon l'une quelconque des revendications précédentes, dans lequel ladite fibre optique (1, 10) est enroulée autour dudit élément structurel (2, 20) et dans lequel au moins une partie de ladite fibre optique enroulée est recouverte par un milieu optique (7, 70) qui présente un indice de réfraction qui est égal ou supérieur à un indice de réfraction dudit élément structurel (2, 20).

6. Dispositif de laser à fibre selon l'une quelconque des revendications 1 à 4, dans lequel ladite fibre optique est enroulée autour dudit élément structurel et au moins une partie de ladite fibre optique enroulée est recouverte par un milieu optique (7, 70) qui présente un indice de réfraction qui est inférieur à un indice de réfraction d'une périphérie la plus externe de ladite fibre optique (1, 10).

7. Appareil d'usinage laser qui comprend un dispositif de laser à fibre selon l'une quelconque des revendications précédentes et un système optique de convergence qui fait converger une lumière laser qui est émise depuis ledit dispositif de laser à fibre sur un objet destiné à être usiné.
